# EUROPEAN PATENT APPLICATION

(11) **EP 1 564 456 A1**
(43) Date of publication of application: **17.08.2005**
(21) Application number: 04100539.8
(22) Date of filing: 12.02.2004
(51) Int. Cl.: F16K 7/04

(54) **Flexible pinch valve**

(71) Applicant: RED VALVE COMPANY, INC., Carnegie, Pennsylvania 15106-0548 (US)
(72) Inventor: Raftis, Chris, PA 15241, Pittsburgh (US); Raftis, Spiros G., PA 15243, Pittsburgh (US)
(74) Representative: Van den Heuvel, Henricus Theodorus

(57) **Abstract**

The invention relates to a pinch valve for connection between an upstream pipeline and a downstream pipeline, the pinch valve comprising: a valve body (12), an elastomeric sleeve (16) at least partially situated in the valve body having an upper portion and a lower portion, and means (20) for moving the lower sleeve portion to the relatively stationary upper sleeve portion. A method of regulating fluid flow is also disclosed.

## Description

### BACKGROUND OF THE INVENTION

The present invention relates generally to pinch valves and, in particular, to flow control valves for large diameter storm water or sewage pipelines.

Sewage processing plants can be overloaded or flooded by high flow inputs caused, for example, by a short duration of heavy rainfall. Therefore, it is necessary to limit the amount of flow into the plant to prevent flooding or discharging of untreated (or under treated) sewage. Currently, thousands of dollars are spent on the failure of valves for use with combined storm and sanitary sewers.

Conventional methods of controlling storm water include influent flow valves that back up the flow into the upstream piping, which are temporary, limited capacity storage facilities, and frequently diverting the flow to retaining basins, which are longer term, higher capacity storage facilities. These conventional valves are typically pinch valves which close from the top only, the top and bottom on a centreline, or side to side.

By closing the valve, either partially or fully, this limits the flow into the processing plant and backs up the water in the upstream piping or retaining basin. After the heavy rainfall subsides, this stored water is released under controlled conditions by adjusting the valve to achieve the desired flow.

There are several disadvantages to using conventional pinch valves to control the influent flow. Since these pipes are usually less than full, the water flows only in the lower portion of the pipe, which is called an open channel flow. If the valve closes from the top only, there is no flow restriction until the upper closing portion of the valve reaches the water level. This results in less than optimum control since much of the valve stroke is ineffective (stroking through air) and not controlling flow.

With valves that close from both top and bottom simultaneously, the bottom portion of the stroke is effective, but the top portion of the stroke is ineffective until the upper closing portion of the valve reaches the water level. Again, this results in less than optimum control since part of the valve's top stroke is ineffective (stroking through air) and not controlling flow.

For valves closing side to side, the flow cannot be shut off completely unless the valve is closed completely. This requires stroking the valve through its entire open/shut range to stop the flow completely, even if there is just three inches of water in a forty-eight inch diameter pipeline.

It is therefore an object of the present invention to provide improved flow control, by having valves capable of stroking or pinching action only from the bottom of the valve to the top of the valve, which eliminates the problems described above for conventional methods of controlling flow. Currently, there are no known direct air operated pinch valves, electric pinch valves, weir type closure valves, or mechanical pinch bar type pinch valves that close from only the bottom up. Thus, it is further the object of the present invention to provide more accurate control of flow, primarily in large diameter pipes, and to facilitate using the pipe as a temporary storage facility.

### SUMMARY OF THE INVENTION

The present invention provides a pinch valve for connecting an upstream pipeline and a downstream pipeline, according claim 1. In a preferred embodiment the pinch valve includes a body having a fixed upper pinch bar and a moveable lower pinch bar and in another preferred embodiment the pinch valve includes an elastomeric sleeve having a throughbore. In yet another embodiment the pinch valve also includes a means to raise and lower the moveable lower pinch bar in order to flex a lower portion of the elastomeric sleeve into and out of the throughbore, so as to regulate the flow of liquids there through.

The elastomeric sleeve may be directed inward and outward by utilizing either the moveable lower pinch bar or compressed fluid selectively pumped into and removed from a space adjacent to the lower portion of the elastomeric sleeve. The elastomeric sleeve may be of varying densities and may include reinforcing material built into the elastomeric sleeve. Additionally, stops may be provided on the upper pinch bar to prevent total closure of the elastomeric sleeve.

The invention will be further elucidated on the basis of the non-limitative embodiments shown in the following figures. Herein:
figure 1a is a sectional side view of a first embodiment of the present invention using an electric motor actuator;
figure 1b is a sectional end view of the first embodiment of the present invention with the sleeve in a fully open position;
figure 1c is a sectional side view of the first embodiment of the present invention about a quarter of the way closed;
figure 1d is a sectional end view of the first embodiment of the present invention about a quarter of the way closed;
figure 1e is a sectional view of a sleeve according to the present invention with an imbedded reinforcing material;
figure 1f is a sectional view of a sleeve according to the present invention with reinforcing material secured to an inner surface of the sleeve;
figure 1g is a perspective view of the first embodiment of the present invention in a partially closed position;
figure 2a is a schematic side view of a second embodiment of the present invention showing water in the valve, with the valve about a quarter of the way closed;
figure 2b is an end view of the device shown in figure 2a;
figure 3a is a partial side view of a third embodiment of the present invention with the valve about a quarter of the way closed;
figure 3b is an end view of the device shown in figure 3a;
figure 4a is a sectional side view of a fourth embodiment of the present invention showing stops on the pinch bar;
figure 4b is a partial end view of the fourth embodiment of the present invention showing stops on the pinch bar; and
figure 5 is a schematic sectional side view of the valve at two different closure points.

The flexible weir style pinch valve assembly of the present invention is useful in many specialized applications, but particularly for use in large diameter (typically 24 inches to 84 inches in diameter) storm water or sewage water pipelines.

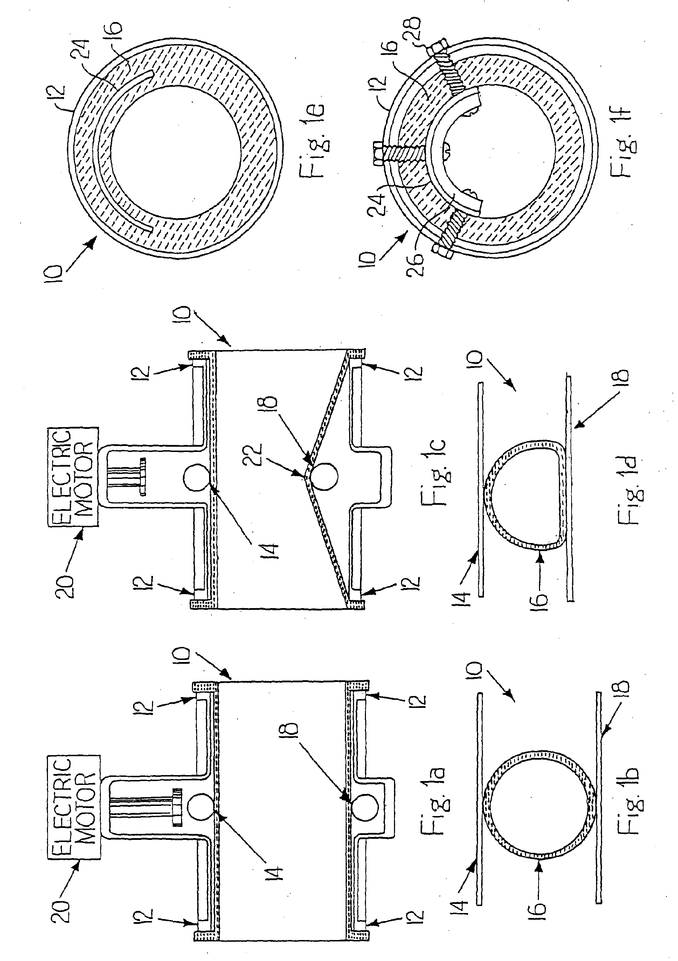

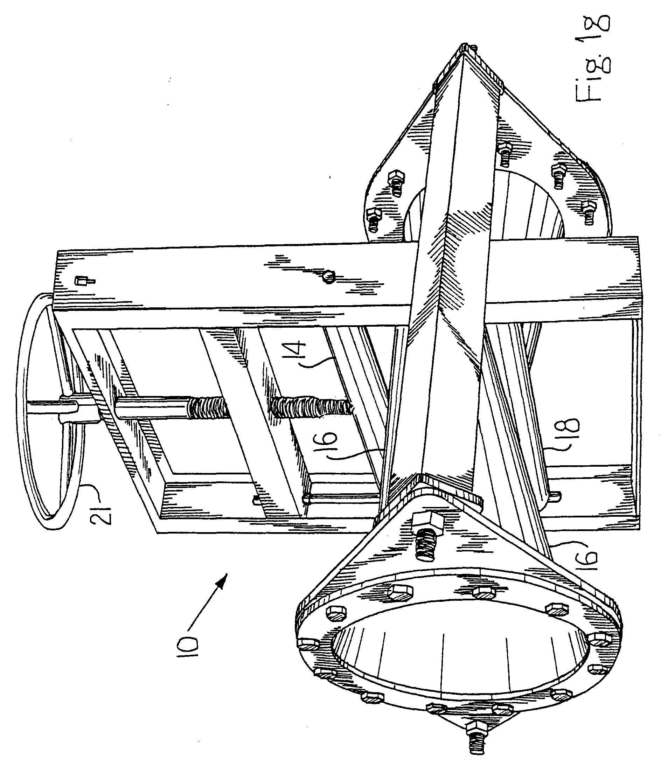

A flexible weir style pinch valve 10, according to the first embodiment of the present invention is shown in figures 1a and 1b. This embodiment of the flexible weir style pinch valve 10 includes a body 12, an upper pinch bar 14, an elastomeric sleeve 16 forming a throughbore, and a lower pinch bar 18. The upper pinch bar 14 is "fixed" in position relative to elastomeric sleeve 16, whereas the lower pinch bar 18 is movable from bottom to top. The upper pinch bar 14 should be welded to the body 12 of the flexible weir style pinch valve 10, which is generally made of a steel body or some similar material. The lower pinch bar 18 may be moved by electric motor actuators 20 as illustrated in figures 1a and 1c, hand wheels 21 (with and without gear reduction mechanisms) as illustrated in figure 1g., pneumatic or hydraulic cylinders, or any other suitable mechanism.

The flexible weir style pinch valve 10, according to the first embodiment, closes from the bottom of the valve only. A conventional type of pinch bar operated pinch valve closes from the top only, or from the top and bottom simultaneously closing on the centerline. The closure of the first embodiment of the present invention is obtained by moving only the lower pinch bar 18 to close the elastomeric sleeve 16, as shown in figure 1b. The lower moving pinch bar 18 is on the bottom of the elastomeric sleeve 16 and strokes upward pushing the elastomeric sleeve 16 against the fixed upper pinch bar 14. As illustrated in figure 1c, this operation raises the bottom of the elastomeric sleeve 16, providing, in effect, a weir or high spot 22 that the water must flow over to pass the flexible weir style pinch valve 10.

When the flexible weir style pinch valve 10 is open, the elastomeric sleeve 16 is fully round, providing no restriction to the water flow as shown in figure 1b. As the lower pinch bar 18 moves upward, it generates a weir or high spot 22, that the water must flow over as shown in figure 1c. This action begins immediately as the flexible weir style pinch valve 10 begins to stroke and works even if there is little water in the pipe. There is no wasted motion stroking the lower pinch bar 18 through the air space above the water, as in the case of conventional top closing, or top and bottom closing valves, as mentioned above.

The elastomeric sleeve 16 in some applications may be fastened to the upper pinch bar 14 and the length of the elastomeric sleeve 16 is of a longer length, for example, a three to one ratio since closure is from only one side. Additionally, as illustrated in figure 1e, a stiffener or reinforcing material 24, such as a band of steel, may be inserted in the top of the pinch valve sleeve 16 to hold it rigidly against the top of the upper pinch bar 14. This reinforcing material 24, such as a band of steel, may be curved and may be approximately 10 to 15 percent of the circumference of the sleeve. Preferably, as illustrated in figure 1f, the reinforcing material 24 may also be mounted on the inner portion of the elastomeric sleeve 16. This may require the use of a plate 26, to protect the reinforcing material 24 and hold it in place. The plate 26 may be approximately 90 percent the length of the flexible weir style pinch valve 10, and may be held in place with fasteners 28 to the body 12 of the flexible weir style pinch valve 10.

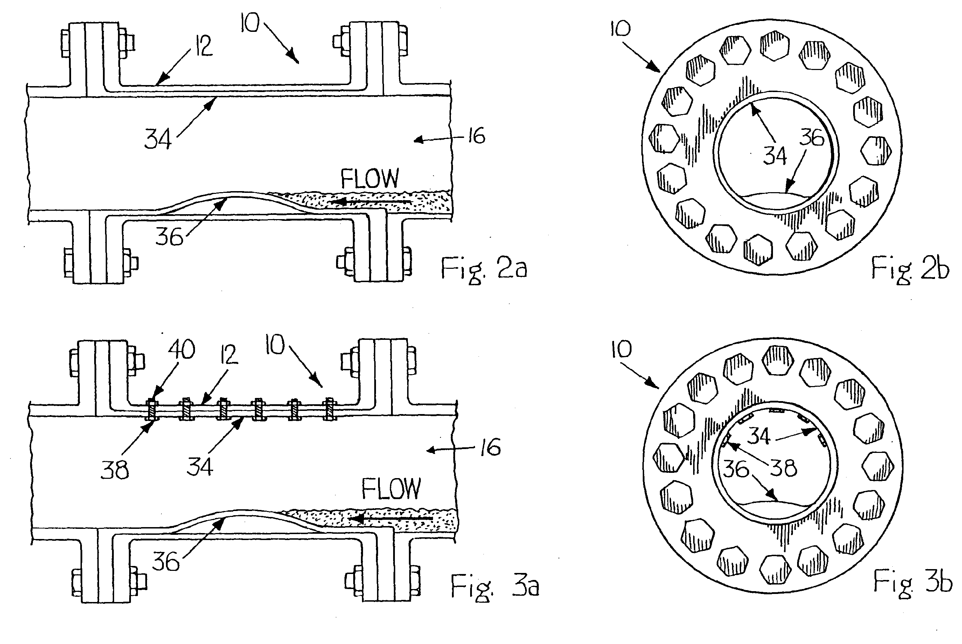

The flexible weir style pinch valve 10, according to a second embodiment of the present invention is shown in figures 2a and 2b, and is operated by fluid (such as air). A conventional type of fluid operated pinch valve closes simultaneously from two or more sides inward, or in a triangular form. The flexible weir style pinch valve 10, described by the second embodiment of the present invention, closes from only one side, the valve bottom 36. The valve top 34 is relatively fixed against collapsing inward.

The operation of the second embodiment of the present invention is similar to that described for the first embodiment of the flexible weir style pinch valve 10 described above. The only significant difference is that in the case of this embodiment, the valve bottom 36 moves in a curved line profile as shown in figure 2b, rather than a more straight line profile when using lower pinch bar 18. Valve bottom 36 is moved with compressed fluid (such as air), which may be electrically controlled and pumped into and withdrawn from the lower portion of the valve body 12 by means well known to those skilled in the art. Water may be seen gathering in the upstream pipeline above raised valve bottom 36.

As illustrated in figure 2a, the top portion of the sleeve 34 is manufactured to be stiffer or more rigid than the lower portion of the sleeve 36. This may be accomplished by using high durometer elastomer, for example, Shore A 90 durometer, additional layers of reinforcing fabric, or embedding reinforcing material 24 in the top portion (for example, top 3/8th) of the sleeve 34. (NOTE: The typical range for elastomeric sleeve material is Shore A 35 to 60.) The bottom portion (for example, bottom 5/8th) would be more flexible rubber, such as Shore A 30. Additionally, the length of the elastomeric sleeve 16 is longer, for example, a three to one ratio since closure is from only one side.

Thus, when fluid (such as air) is pumped into the valve body 12, only the more flexible lower portion 36 of the sleeve collapses inward.

Some suitable reinforcing materials 24 include solid steel plate, perforated steel plate, heavy steel mesh, steel wire, and other suitable materials. The corners and edges of the reinforcing materials 24 are rounded so they do not cut into the elastomer (and fabric reinforcing material, when used). Preferably, perforated plates and mesh are used since the elastomer flows into the openings and provides a superior bond to the reinforcing material 24.

The flexible weir style pinch valve 10 according to a third embodiment of the present invention is shown in figures 3a and 3b. In this embodiment, the flexible weir style pinch valve 10 is similar to the second embodiment flexible weir style pinch valve 10, with like reference numerals indicating similar parts. The third embodiment flexible weir style pinch valve 10, as an alternative, includes a standard non-stiffened elastomeric sleeve 16, which must be fastened to the inside top of the body 12. This may be done in many ways, for example, by using adhesives or, mechanically by using bolts 38 penetrating through the elastomeric sleeve 16, and through the body 12 and then holding the bolts 38 in place using nuts 40. Although not shown in figure 3b, a rounded plate (for example 130 degrees by approximately 1/3rd length of the valve) may be used to secure elastomeric sleeve 16 to the valve body 12 with bolts 38. Since this method penetrates two or three pressure boundaries (through the elastomeric sleeve 16 and through the valve body 12), great care must be taken to adequately seal these penetrations.

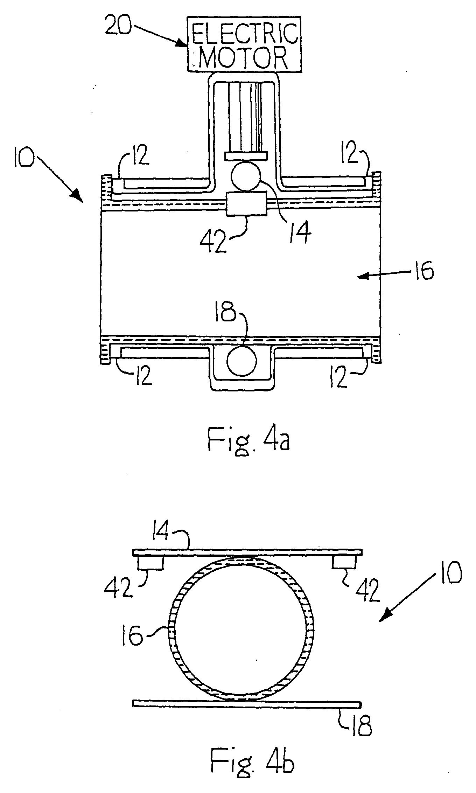

The flexible weir style pinch valve 10, according to a fourth embodiment of the present invention, is shown in figures 4a and 4b. In this embodiment, the flexible weir style pinch valve 10 is similar to the first embodiment flexible weir style pinch valve 10, with like reference numerals indicating similar parts. The fourth embodiment flexible weir style pinch valve 10, as an alternative, includes stops 42 to prevent a 100% closure of the flexible weir style pinch valve 10. Specifically, the stops 42 prevent the lower pinch bar 18 from contacting the upper pinch bar 14.

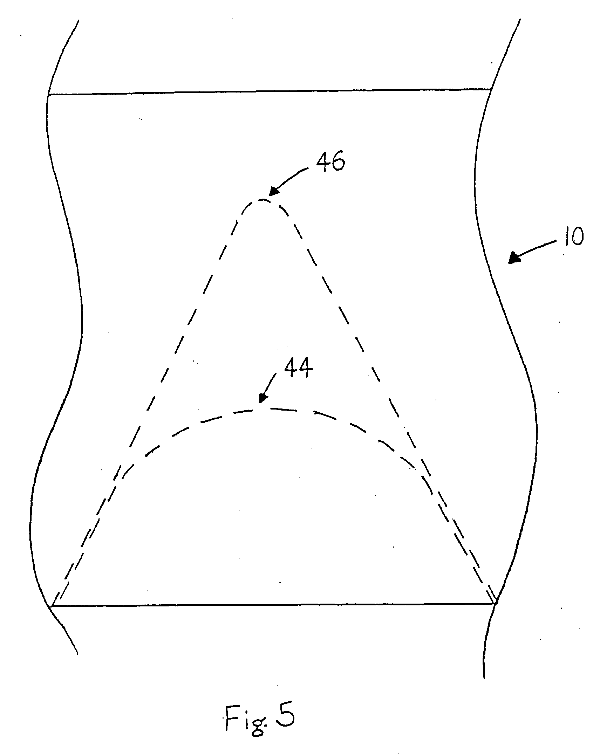

With reference to figure 5 and with continuing reference to figure 1g, a typical environmental setting in which the flexible weir style pinch valve 10 may be utilized is that of an urban area, in which it would be advantageous to control the flow of storm water, especially the flow of storm water during any initial storm water surge, which may normally result in flooding. To this end, multiple flexible weir style pinch valves 10 of various sizes are installed in appropriate areas of a storm water network to form a valve system. Each flexible weir style pinch valve 10 includes various closure points, as determined by the movement of the lower pinch bar 18 in relation to the elastomeric sleeve 16. Thus, an operator of the flexible weir style pinch valve 10 may select different closure points of the flexible weir style pinch valve 10 in response to various storm water conditions. For example, a reduced flow closure 44 may be selected for normal storm water conditions, whereas a highly reduced flow closure 46 may be selected to control the flow of storm water at the peak of a major storm. Each closure 44, 46 forms a dam of a certain height, which either partially or fully reduces the flow of the storm water at certain areas within the valve system. Each flexible weir style pinch valve 10 may include a flow meter that measures the volume of storm water that is contained by the flexible weir style pinch valve 10. Thus, the operator overseeing the operation of the valve system will be aware of the total volume of storm water that is stored within the valve system.

This invention has been described with reference to the preferred embodiments. Obvious modifications and alterations will occur to others upon reading and understanding the preceding detailed description. There are, of course, other methods for operating a pinch valve from the bottom up, any of which may be used to achieve the improved operation described in this invention disclosure. It is intended that the invention be construed to include all such modifications and alterations.

## Claims

1. Pinch valve for connection between an upstream pipeline and a downstream pipeline, the pinch valve comprising:
- a valve body,
- an elastomeric sleeve at least partially situated in the valve body having an upper portion and a lower portion, and
- means for moving the lower sleeve portion to the relatively stationary upper sleeve portion.

2. Pinch valve as claimed in claim 1, **characterised in that** the pinch valve further comprises a body having a fixed upper pinch bar and a moveable lower pinch bar, wherein the elastomeric sleeve is situated between the fixed upper pinch bar and the moveable lower pinch bar; and means to raise and lower the moveable lower pinch bar.

3. Pinch valve as claimed in claim 1 or 2, **characterised in that** the body comprises a valve housing.

4. Pinch valve as claimed in claim 2 or 3, **characterised in that** the fixed upper pinch bar and the moveable lower pinch bar are substantially perpendicular to the elastomeric sleeve.

5. Pinch valve as claimed in any of the claims 2 - 4, **characterised in that** the elastomeric sleeve further comprises an upper portion and a lower portion, wherein the upper portion is adjacent to the fixed upper pinch bar and the lower portion is adjacent to the moveable lower pinch bar.

6. Pinch valve as claimed in any of the foregoing claims, **characterised in that** wherein the upper portion of the elastomeric sleeve is relatively fixed and the lower portion of the elastomeric sleeve is relatively moveable.

7. Pinch valve as claimed in any of the foregoing claims, **characterised in that** the pinch valve further comprises one of a reinforcing material secured within the upper portion of the elastomeric sleeve, and a reinforcing material secured to an interior of the upper portion of the elastomeric sleeve.

8. Pinch valve of as claimed in claim 7, **characterised in that** the reinforcing material is a curved plate.

9. Pinch valve as claimed in any of the claims 3 - 8, **characterised in that** the upper portion of the elastomeric sleeve is fastened to an upper portion of the valve housing.

10. Pinch valve as claimed in any of the foregoing claims, **characterised in that** the moving means comprises one of an electric motor, a hand wheel, a pneumatic cylinder, and a hydraulic cylinder.

11. Pinch valve as claimed in any of the claims 2 - 10, **characterised in that** the pinch valve further comprises one or more stops situated on the upper pinch bar.

12. Pinch valve as claimed claim 1, **characterised in that** the elastomeric sleeve is provided with a throughbore, the lower portion of the elastomeric sleeve being relatively moveable and the upper portion being relatively fixed; and the moving means are control means to flex the lower portion of the elastomeric sleeve into and out of the throughbore, to regulate the flow of liquids there through.

13. Pinch valve as claimed in claim 12, **characterised in that** the control means comprises compressed fluid selectively pumped into and removed from a space adjacent to the lower portion of the elastomeric sleeve.

14. Pinch valve as claimed in claim 12 or 13, **characterised in that** the control means comprises a pinch bar.

15. Pinch valve as claimed in any of the claims 12 - 14, **characterised in that** the top portion of the elastomeric sleeve is fastened to the top portion of the body.

16. Pinch valve as claimed in any of the claims 12 - 15, **characterised in that** the top portion of the elastomeric sleeve includes a stiffener.

17. Method for regulating fluid flow between an upstream pipeline and a downstream pipeline, the method comprising the steps of:
(a) connecting a pinch valve between the upstream pipeline and the downstream pipeline, the pinch valve comprising an elastomeric sleeve with a throughbore wherein the elastomeric sleeve includes an upper portion and a lower portion;
(b) directing fluid from the upstream pipeline to the pinch valve;
(c) directing the lower portion only of the elastomeric sleeve into the throughbore, thereby creating a weir effect in the throughbore and reducing fluid flow through the pinch valve; and
(d) retracting the lower portion of the elastomeric sleeve outward, thereby increasing fluid flow to the downstream pipeline.

18. Method as claimed in claim 17, **characterised in that** in steps (c) and (d), the lower portion of the elastomeric sleeve is directed inward and outward by a moveable pinch bar.

19. Method as claimed in claim 17 or 18 **characterised in that** the upper portion of the elastomeric sleeve remains relatively fixed, while the lower portion of the elastomeric sleeve is directed inward and outward.

20. Method as claimed in any of the claims 17- 19, **characterised in that** in steps (c) and (d), the lower portion of the elastomeric sleeve is directed inward and outward by injecting and withdrawing a compressed fluid from an enclosed space adjacent to the lower portion of the elastomeric sleeve.

21. Method as claimed in any of the claims 17 - 20, **characterised in that** the lower portion of the elastomeric sleeve is directed inward to a sufficient degree as to result in fully closing the elastomeric sleeve.

22. Method for regulating storm water flow within a storm water network, the method comprising the steps of:
(a) installing a plurality of pinch valves within a storm water network to form a valve system, wherein each of the pinch valves comprise an elastomeric sleeve having a throughbore, wherein the elastomeric sleeve includes an upper portion and a lower portion;
(b) directing storm water into the valve system so that the storm water enters at least one of the plurality of pinch valves;
(c) storing a volume of storm water within the valve system by moving the lower portion only of the elastomeric sleeve of the at least one of the plurality of pinch valves into the throughbore of the at least one of the plurality of pinch valves;
(d) measuring the volume of storm water within the valve system; and
(e) retracting the lower portion of the elastomeric sleeve outward from the at least one of the plurality of pinch valves based upon the volume of storm water within the valve system.
